# EUROPÄISCHE PATENTANMELDUNG

(11) **EP 2 551 540 A1**
(43) Veröffentlichungstag der Anmeldung: **30.01.2013**
(21) Anmeldenummer: 12170254.2
(22) Anmeldetag: 31.05.2012
(51) Int. Cl.: F16C 35/02, F16C 35/063, F16H 57/00

(54) **Zahnradeinrichtung für einen Getriebestrang**

(30) Priorität: 28.07.2011 DE 102011079992
(71) Anmelder: Schaeffler Technologies AG & Co. KG, 91074 Herzogenaurach (DE)
(72) Erfinder: Rocca, Umberto, 91074 Herzogenaurach (DE); Malik, Reinhart, 91074 Herzogenaurach (DE)

(57) **Zusammenfassung**

Die Erfindung bezieht sich auf eine Zahnradeinrichtung mit einem Grundkörper (1), einem an dem Grundkörper (1) ausgebildeten Zahnkranz (2), einem Nabenabschnitt (3),
einer Lagereinrichtung (4) die in dem Nabenabschnitt (3) aufgenommen ist, und einem Steckzapfen (5) der in die Lagereinrichtung (4) eingesetzt ist. Erfindungsgemäß sind der Steckzapfen (5) und die Lagereinrichtung (4) in dem Grundkörper (1) derart axial gesichert, dass der Grundkörper (1), die Lagereinrichtung (4) und der Steckzapfen (5) eine für sich vormontierte Baueinheit bilden.

## Beschreibung

### Gebiet der Erfindung

Die Erfindung bezieht sich auf eine Zahnradeinrichtung mit einem Zahnradgrundkörper und einem durch diesen gebildeten Zahnkranz, der als solcher in verbautem Zustand mit einem An- und/oder Abtriebsorgan eines die Zahnradeinrichtung beinhaltenden Getriebestranges in Eingriff steht.

Aus DE 10 2007 049 050 A1 ist eine Zahnradeinrichtung bekannt, die einen Zahnradkörper mit einem ersten und einem zweiten, jeweils axial überstehenden Achszapfen aufweist. Die beiden Achszapfen bilden jeweils eine Lagerfläche auf welcher ein Nadellager sitzt. Die so mit Nadellagern bestückten Achszapfen sitzen in Lagerbohrungen welche in einem Getriebegehäuse ausgebildet sind. Die Lagerbohrungen, die Nadellager und die Lagerflächen müssen derart aufeinander abgestimmt sein, dass sich im Bereich der hierdurch gebildeten Lagerstelle ein hinreichendes Lagerspiel ergibt. Zudem müssen in die in dem Getriebegehäuse gebildeten Bohrungen qualitativ hochwertige Laufflächen bilden.

### Aufgabe der Erfindung

Der Erfindung liegt die Aufgabe zugrunde, eine Zahnradeinrichtung für einen Getriebestrang zu schaffen die unter fertigungstechnischen Gesichtspunkten relativ kostengünstig herstellbar und bei verminderten Anforderungen an die Aufnahmeperipherie montagetechnisch vorteilhaft in einen entsprechenden Getriebestrang einbindbar ist.

### Erfindungsgemäße Lösung

Diese Aufgabe wird erfindungsgemäß gelöst durch eine Zahnradeinrichtung mit:
- einem Grundkörper,
- einem an dem Grundkörper ausgebildeten Zahnkranz,
- einem Nabenabschnitt,
- einer Lagereinrichtung die in dem Nabenabschnitt aufgenommen ist, und
- einem Steckzapfen der in die Lagereinrichtung eingesetzt ist,
- wobei der Steckzapfen und die Lagereinrichtung in dem Grundkörper derart axial gesichert sind, dass der Grundkörper, die Lagereinrichtung und der Steckzapfen eine für sich vormontierte Baueinheit bilden.

Dadurch wird es auf vorteilhafte Weise möglich, eine Zahnradeinrichtung zu schaffen die als ins sich vormontierte Baugruppe gehandhabt und zur Schaffung eines Getriebestrangs in eine entsprechende Umgebungsstruktur eingesetzt werden kann, wobei die Umgebungsstruktur lediglich hinsichtlich der Aufnahme des Steckzapfens geeignete Geometrien bilden muss und die Lageraufgaben innerhalb der Baugruppe bewältigt werden.

Gemäß einer besonders bevorzugten Ausführungsform der Erfindung ist der Steckzapfen derart dimensioniert, dass dieser beidseitig axial über die entsprechende Stirnseite des Nabenabschnitts übersteht. Das Überstandsmaß kann derart gering gehalten werden, dass die an den, den Steckzapfen quer abstützenden Sitzflächen auftretenden Pressungen deutlich über der gemittelten Pressung im Bereich der Lagereinrichtung liegen, da der Steckzapfen im wesentlichen keine Rotation in den entsprechenden Aufnahmebohrungen vollführt. Der Steckzapfen kann einen relativ großen Außendurchmesser aufweisen und hierbei als Hohlzapfen ausgeführt sein. Bei dieser Variante steht für die innere Abstützung der Lagereinrichtung eine große innere Lauffläche zur Verfügung. Durch den Steckzapfen können Befestigungsorgane, insbesondere Schrauben hindurchgeführt werden, durch welche etwaige, die Umgebungsstruktur bildende Gehäuseschalen miteinander verbunden werden können. Alternativ zur der Ausführung des Steckzapfens als Alternativ zur der Ausführung des Steckzapfens als Hohlbolzen ist es auch möglich, diesen als Vollmaterialzapfen, insbesondere in der Art eines Passstiftes zu fertigen.

Der Grundkörper ist gemäß einer besonders bevorzugten Ausführungsform der Erfindung als Blechumformteil gefertigt. Die Umformung des Blechmaterials kann Zieh-, Biege- und Fließpressumformungsschritte beinhalten. Insbesondere im Bereich des Zahnkranzes kann der Grundkörper so gestaltet sein, dass das Material in die Zahnzonen radial einbaucht und dabei auf der Rück- oder Innenseite ein Wellen- oder Zahnprofil bildet.

Gemäß einem besonderen Aspekt der Erfindung ist die Lagereinrichtung als Gleitlager ausgeführt. Dieses Gleitlager umfasst dabei eine Schalen- oder Buchsenstruktur die der radialen Lagerung des Grundkörpers auf dem Steckzapfen dient. Diese Schalen- oder Buchsenstruktur ist vorzugsweise in dem Nabenabschnitt des Grundkörpers drehfest verankert. Weiterhin ist vorzugsweise in die Baugruppe auch eine als Gleitringlager ausgeführte Axiallagereinrichtung eingebunden durch welche der Grundkörper in verbautem Zustand axial abgestützt wird. Während damit die Radiallagerung über Laufflächen realisiert wird, die vollständig innerhalb der vormontierten Baugruppe gebildet sind, wird die Axiallagerung im Zusammenspiel mit Laufflächen realisiert die durch die Aufnahmestrukturen bereitgestellt werden. Die entsprechenden Gleit-lagerstrukturen sind jedoch noch in die Baugruppe integriert. Es ist auch möglich, die Axiallagerung in Verbindung mit Anlaufringen zu realisieren die ebenfalls noch in die vormontierte Baugruppe integriert sein können.

Durch das erfindungsgemäße Konzept wird es möglich, ein in sich hinsichtlich der Lagerung komplettiertes Zahnradmodul zu schaffen das als entsprechend fertige Baugruppe von einem Abnehmer verbaut werden kann, ohne dass dieser in Verbindung mit der Aufnahmestruktur Rotationslagerflächen bereitstellen muss. Innerhalb des Zahnradmoduls können durch den Systemlieferanten Lagersysteme realisiert werden die einen Bewegungswirkungsgrad und eine Lebensdauer bieten die deutlich über dem Bewegungswirkungsgrad und der Lebensdauer von konventionellen Zahnradlagerungen liegt. Durch die Integration der Lagereinrichtung in das Zahnradmodul kann der axiale Überstand des Steckzapfens gegenüber bisherigen Bauweisen reduziert und damit auch am Getriebegehäuse eine erhebliche Bauraumersparnis realisiert werden.

Alternativ zu der vorangehend genannten Ausführung der Lagereinrichtung als Gleitlagereinrichtung mit eingepressten Gleitlagerschalen- oder Buchsen ist es auch möglich, die Lagereinrichtung als Wälzlager, insbesondere als zweireihiges Nadellager auszuführen. Bei der Ausführung des Wälzlagers als zweireihiges Nadellager kann dieses so ausgebildet sein, dass die Nadeln beider Laufreihen in einem gemeinsamen Korb geführt sind. Zwischen den beiden Laufreihen kann innerhalb des Korbes ein innerer Ringspaltraum verbleiben. In diesem Ringspaltraum kann eine Axialsicherung realisiert sein, über welche der Steckzapfen in dem Zahnradmodul gegen Herausfallen gesichert ist. Diese Axialsicherung kann insbesondere durch ein Ringelement, beispielsweise einen Federring realisiert sein, welcher in einer Umfangsnut des Steckzapfens sitzt und mit seinem Außenbereich in den Ringspaltraum eintaucht.
Es ist möglich, den Innenumfangsbereich des Nabenabschnitts so auszubilden, dass dieser eine als Wälzkörperlauffläche geeignete Innenfläche darstellt. Vorzugsweise jedoch umfasst die Lagereinrichtung eine Wälzlagerlaufbuchse, die axial in den Nabenabschnitt eingepresst ist. Die Innenumfangsfläche dieser Wälzlagerlaufbuchse bildet dann die entsprechende Lauffläche für die Wälzkörper der Wälzlagereinrichtung.

Wie bereits ausgeführt, ist der Steckzapfen durch eine Axialsicherungsstruktur in das unter Einschluss des Steckzapfens gebildete Zahnradmodul eingebunden. Die Axialsicherungsstruktur wird sowohl bei der Gleitlagervariante, als auch bei der Wälzlagervariante vorzugsweise durch Strukturen bewerkstelligt die sich im Zusammenspiel mit der Gleit- oder Wälzlagereinrichtung ergeben. Die Axiallagerung kann als Teillagerung ausgeführt sein, die erst in verbautem Zustand die erforderlichen axial stützenden Laufflächen erhält. Die Axiallagereinrichtung kann jedoch auch als in sich abgeschlossene, sämtliche Laufflächen umfassende Lagereinrichtung ausgeführt sein die über die Kom-chen umfassende Lagereinrichtung ausgeführt sein die über die Komponenten des erfindungsgemäßen Zahnradmoduls bereitgestellt wird.

Gemäß einer besonders bevorzugten Ausführungsform der Erfindung ist der Nabenabschnitt als Zieh- und / oder Fließpressumformungsstruktur gefertigt. Die Axiallänge des Nabenabschnitts entspricht vorzugsweise der Axiallänge der zur radialen Lagerung erforderlichen Lagereinrichtung.

Die vorangehend angesprochene Radiallagerung ist vorzugsweise so ausgeführt, dass diese im Zusammenspiel mit der Axiallagereinrichtung auch relativ große Kippkräfte, d.h. axial einseitige Radialpressungen an den Laufflächen aufnehmen kann.

Die Zahnkranzeinrichtung kann als Transmissionsstruktur dienen, die sowohl mit Antriebs-, als auch mit Abtriebsorganen in Eingriff steht. Die Verzahnung kann als Schneid, Stanz-, oder als Pressumformungsstruktur gefertigt und ggf. spanabhebend überarbeitet sein.

Gemäß einem besonderen Aspekt der vorliegenden Erfindung kann der Grundkörper so gestaltet sein, dass dieser zwei Zahnkranzzonen bildet. Die hierbei erste Zahnkranzzone kann ein Großrad, insbesondere einen Stirnradzahnkranz mit großem Durchmesser bilden. Die zweite Zahnkranzzone kann einen Ritzelzahnkranz bilden der vorzugsweise unmittelbar auf dem Nabenabschnitt sitzt. Das Material des Nabenabschnitts kann hierbei wiederum von innen her wellig in die Verzahnung einbauchen. Die entsprechend wellige Wandung wird durch die eingesetzte Gleit- oder Wälzlagerlaufbuchse kompensiert. Vorzugsweise ist der vom Ritzelkranz umgriffenen Innenbereich des Nabenabschnitts geometrisch derart gestaltet, dass dieser die Gleit- oder Wälzlagerlaufbuchse mit hoher radialer Belastbarkeit radial abstützt.

### Kurzbeschreibung der Figuren

Weitere Einzelheiten und Merkmale der Erfindung ergeben sich aus der nachfolgenden Beschreibung in Verbindung mit der Zeichnung. Es zeigt:
- **Figur 1**: eine erste Axialschnittdarstellung zur Veranschaulichung des Aufbaus einer ersten Ausführungsform einer erfindungsgemäßen Zahnradeinrichtung für einen Getriebestrang, hier mit einer Gleitlagereineinrichtung,
- **Figur 2**: eine zweite Axialschnittdarstellung zur Veranschaulichung des Aufbaus einer zweiten Ausführungsform einer erfindungsgemäßen Zahnradeinrichtung für einen Getriebestrang, hier ebenfalls wieder mit einer Gleitlagereineinrichtung,
- **Figur 3**: eine dritte Axialschnittdarstellung zur Veranschaulichung des Aufbaus einer dritten Ausführungsform einer erfindungsgemäßen Zahnradeinrichtung für einen Getriebestrang, hier mit einem unmittelbar auf dem Nabenabschnitt sitzenden Ritzel und einer in dem Nabenabschnitt aufgenommenen Wälzlagereinrichtung,

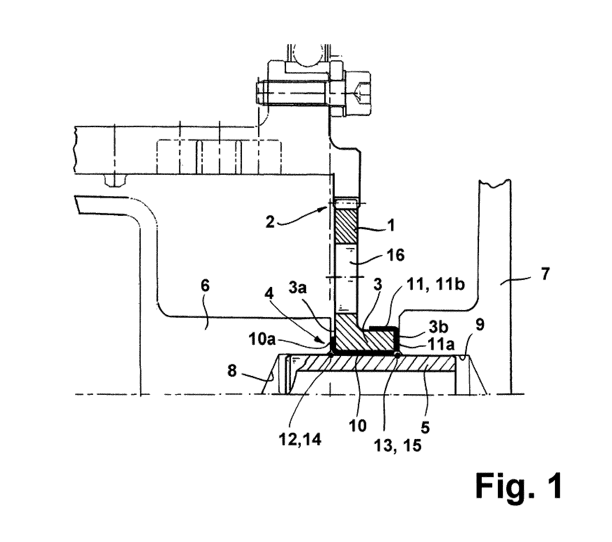

In Figur 1 ist eine erfindungsgemäße Zahnradeinrichtung dargestellt. Diese umfasst einen Grundkörper 1 der einen Zahnkranz 2, sowie einen Nabenabschnitt 3 bildet. In dem Nabenabschnitt 3 des Grundkörpers 1 ist eine Lagereinrichtung 4 aufgenommen. In der Lagereinrichtung 4 sitzt ein Steckzapfen 5. Der Steckzapfen 5 ist in die Lagereinrichtung 4 eingesetzt und im Zusammenspiel mit der Lagereinrichtung 4 in dem Grundkörper 1 axial gesichert. Der Grundkörper 1, die Lagereinrichtung 4 und der Steckzapfen 5 bilden eine für sich vormontierte Baueinheit die von einem Abnehmer in eine hier aus Gehäusehälften 6, 7 gebildete Aufnahmestruktur eingesetzt werden kann, ohne dass der Abnehmer sich in besonderem Maße mit der Montage der Lagereinrichtung 4 sowei deren Innenaufbau zu befassen hat.

In den Gehäusehälften 6, 7 sind Passbohrungen 8, 9 ausgebildet. Der Steckzapfen 5 ist derart dimensioniert, dass dieser beidseitig axial über die entsprechende Stirnseite des Nabenabschnitts 3 übersteht. Die genannten axialen Überstände des Steckzapfens 5 sind in enger Passung in den Passbohrungen 8, 9 aufgenommen. Die Passbohrungen 8, 9 können unter geringen Anforderungen an die Oberflächengüte ihrer Passflächen gefertigt, insbesondere als einfache Bohrungen gefertigt werden.

Wie in dieser Darstellung weiter ersichtlich, ist der Steckzapfen 5 als Hohlzapfen ausgeführt. Durch diesen Hohlzapfen können etwaige Schraubbolzen hindurchgeführt sein, über welche die Gehäusehälften 6, 7 verbunden werden können und auch der Steckzapfen zusätzlich abgestützt werden kann.

Der Grundkörper 1 ist gemäß einem besonderen Aspekt der vorliegenden Erfindung hier als Blechumformteil gefertigt. Der Zahnkranz 2 ist als Stanzgeometrie gefertigt und geringfügig überschliffen. Der Nabenabschnitt 3 ist als Zieh- und Fließpressgeometrie erstellt und im Bereich der Stirnseiten 3a, 3b überdreht.

Die Lagereinrichtung 4 ist bei diesem Ausführungsbeispiel als Gleitlager ausgeführt und umfasst eine in den Nabenabschnitt 3 eingepresste Gleitmaterialbuchse 10. Diese bestehet beispielsweise aus einem Sandwichlagermaterial mit einer Wanddicke von etwa 2mm. Über diese Gleitmaterialbuchse 10 wird der Grundkörper radial sowie gegen Verkippung auf dem Steckzapfen 5 drehbewegbar gelagert.

Die Lagereinrichtung 4 bildet weiterhin auch ein Axiallager durch welches der Grundkörper in axialer Richtung an den entsprechenden, die Passbohrungen 8, 9 umsäumenden Stirnseiten der Gehäusehälften 6, 7 abgestützt wird. Dieses Axiallager umfasst einen integral mit der Gleitlagerbuchse 10 ausgeführten Stirnring 10a, sowie einen auf den Nabenabschnitt 3 aufgesetzten Stützring 11. Der Stützring 11 bildet einen Stirnringabschnitt 11a welcher an der Stirnseite der Gehäusehälfte 9 im Umgebungsbereich der Passbohrung 9 anläuft.

Bei dem hier gezeigten Ausführungsbeispiel wird die Sicherung des Steckzapfens 5 in dem Grundkörper bewerkstelligt, indem im Bereich der Stirnringabschnitte 10a, 11a in dem Steckzapfen 5 Nuten 12, 13 ausgebildet und in diese Nuten Ringelemente 14, 15 eingesetzt sind. Diese beiden Ringelemente 14, 15 können aus einem Drahtmaterial. beispielsweise Federstahl gefertigt werden und damit relativ stramm in den zugeordneten Nuten 14, 15 sitzen. Vorzugsweise jedoch sind die Ringelemente 14, 15 aus einem Werkstoff, z.B. einem Kunststoffmaterial gefertigt, dass lediglich eine für die geforderte Verliersicherungswirkung ausreichende Festigkeit hat und sich ansonsten ggf. während des Betriebs der Getriebeeinrichtung allmählich aufbrauchen kann. Bei der Ausführung aus einem Kunststoffmaterial wird vermieden, dass diese Bauteile soweit diese sich unvorhergesehen lösen zu Schäden in der Getriebeeinrichtung führen. Die hierdurch realisierten Sicherungsstrukturen fungieren damit letztlich als Montagehilfen.

Die axiale Sicherung des Steckzapfens 5 in der Lagereinrichtung 4 kann auch durch anderweitige Organe, insbesondere unmittelbar durch die Gleitlagerbuchse 10 oder durch die Stirnringabschnitte bereitgestellte Strukturen realisiert werden. So können beispielsweise jene die Stirnringabschnitte 10a, 11a bildenden Ringelemente so gestaltet sein, dass diese unter leichter radial Weitung über den Steckzapfen 5 geschoben werden und dann in die Nuten 12, 13 einschnappen. Insbesondere ist es auch möglich, die axiale Sicherung des Steckzapfens 5 nur unter Rückgriffnahme auf eine einzige Umfangsgeometrie, insbesondere die Umfangsnut 13 zu bewerkstelligen, indem beispielsweise der Stirnringabschnitt 11a in die Umfangsnut 15 einschnappt und dieser Stirnringabschnitt durch den auf dem Nabenabschnitt stramm sitzenden Mantelabschnitt 11 b gesichert wird.

An dem Grundkörper 1 können weitere Geometrien verwirklicht sein durch welche z.B. die Struktursteifigkeit erhöht und/oder die Bauteilsmasse und das Trägheitsmoment reduziert werden. Lediglich beispielhaft sind bei dem hier gezeigten Ausführungsbeispiel Durchbrechungen 16 aus dem Grundkörper 1 ausgestanzt.

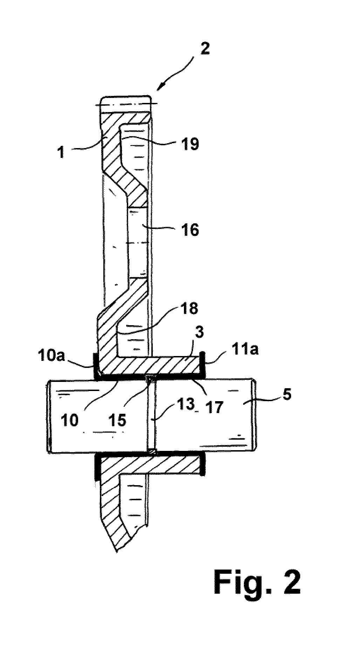

In Figur 2 ist ein weiteres Ausführungsbeispiel einer erfindungsgemäßen Zahnradeinrichtung dargestellt. Auch diese Zahnradeinrichtung umfasst einen Grundkörper 1, einen an dem Grundkörper 1 ausgebildeten Zahnkranz 2, einen Nabenabschnitt 3, eine Lagereinrichtung 4 die in dem Nabenabschnitt 3 aufgenommen ist, und einen Steckzapfen 5 der in die Lagereinrichtung 4 eingesetzt ist, wobei der Steckzapfen 5 und die Lagereinrichtung 4 in dem Grundkörper 1, konkret in dem Nabenabschnitt 3 derart axial gesichert sind, dass der Grundkörper 1, die Lagereinrichtung 4 und der Steckzapfen 5 eine für sich vormontierte Baueinheit bilden.

Auch bei diesem Ausführungsbeispiel ist der Steckzapfen 5 derart dimensioniert, dass dieser beidseitig axial über die entsprechende Stirnseite des Nabenabschnitts 4 übersteht. Der Steckzapfen 5 ist hier als Vollmaterialzapfen ausgeführt und in einem vom Nabenabschnitt 3 umgriffenen Bereich, in etwa mittig zwischen den Stirnseiten desselben mit einer Umfangsnut 13 versehen. In dieser Umfangsnut 13 sitzt ein aus einem Kunststoffmaterial, insbesondere Polyamid oder PEEK gefertigtes Ringelement 15. Dieses Ringelement 15 ragt radial über die Außenumfangsfläche des Steckzapfens 5 hervor und taucht dabei in einen vom Nabenabschnitt 3 umgriffenen Ringspalt ein. Dieser Ringspalt wird axial von den Lagerbuchsen 10, 17 begrenzt. Diese Lagerbuchsen 10, 17 sind axial in den Nabenabschnitt 3 eingepresst und in dem Nabenabschnitt 3 mit einem ausgeprägten Presssitz axial verankert. Sie sind axial derart kurz ausgebildet, dass diese bei vollständigem Einpressen den hier gezeigten, für den Sicherungsring erforderlichen Ringspalt belassen. Jede Lagerbuchse 10, 17 ist mit einem integral angeformten Stirnringabschnitt 10a, 11a versehen über welchen wie bereits in Verbindung mit Figur 1 angesprochen eine axiale Abstützung des Grundkörpers 1 bzw. des Nabenabschnitts 3 an einer Aufnahmestruktur bewerkstelligt wird.

Auch bei diesem Ausführungsbeispiel ist der Grundkörper als Blechumformteil, insbesondere als Zieh- und Fließ-/Pressteil gestaltet und mit Durchbrüchen 16 versehen. In dem Zwischenbereich zwischen dem Nabenabschnitt 4 und dem Zahnkranz 2 sind Umfangssicken 18, 19 ausgebildet durch welche die Steifigkeit des Grundkörpers 1 erhöht wird.

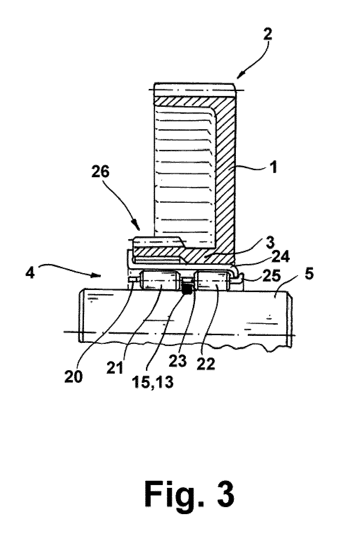

In Figur 3 ist ein drittes Ausführungsbeispiel einer erfindungsgemäßen Zahnradeinrichtung dargestellt. Wie auch bei den beiden vorangehend beschriebenen Ausführungsbeispielen umfasst die Zahnradeinrichtung einen Grundkörper 1, einen an dem Grundkörper 1 ausgebildeten Zahnkranz 2, einen Nabenabschnitt 3, eine Lagereinrichtung 4 die in dem Nabenabschnitt 3 aufgenommen ist, und einen Steckzapfen 5 der in die Lagereinrichtung 4 eingesetzt ist, wobei der Steckzapfen 5 und die Lagereinrichtung 4 in dem Nabenabschnitt 3 derart axial gesichert sind, dass der Grundkörper 1, die Lagereinrichtung 4 und der Steckzapfen 5 eine für sich vormontierte Baueinheit bilden.

Abweichend von den vorangehend beschriebenen Ausführungsbeispielen ist hier die Lagereinrichtung 4 als Wälzlager, konkret als zweireihiges Nadellager ausgeführt. Diese Nadellager umfasst eine erste und eine zweite Nadellaufreihe 21, 22. Die Nadeln der beiden Laufreihen 21, 22 sind in einem gemeinsamen Korb oder Fensterkäfig 20 derart geführt, dass zwischen den Laufreihen 21, 22 ein Ringraum 23 verbleibt. In diesen Ringraum taucht radial von innen her ein in dem Steckzapfen 5 axial in einer Nut 13 sitzender und damit gesicherter Sicherungsring 15 ein. Der Zusammenbau dieser Anordnung erfolgt, indem zunächst der Sicherungsring 15 in die Umfangsnut 13 des Steckzapfens 5 eingesetzt wird. Anschließend wird der lediglich mit den Nadeln einer Laufreihe bestückte Fensterkäfig aufgeschoben bis die Nadeln an dem Sicherungsring 15 axial anstehen. Nunmehr werden die weiteren Nadeln in die Fenster der zweiten Laufreihe von außen her eingesetzt. Auf den so bestückten und bereits axial gesicherten Fensterkäfig wird eine Laufbuchse 24 aufgeschoben. Diese verrastet mit einem Raststeg 25 des Fensterkäfigs 20. Die so geschaffene Einheit wird in den Nabenabschnitt 3 eingepresst bis der Stirnringabschnitt 10a der Laufbuchse 25 auf der entsprechenden Stirnseite des Nabenabschnitts 3 aufsitzt. Nunmehr ist der Steckzapfen 5 über die Lagerung 4 in dem Grundkörper axial gesichert und die so zusammengesetzten Komponenten bilden eine in sich geschlossene Baugruppe die von einem Abnehmer effizient in ein entsprechendes entsprechendes Getriebesystem eingebunden werden kann, indem die überstehenden Abschnitte des Steckzapfens 5 ohne besondere Rücksichtnahme auf Lagerstellen in entsprechende Aufnahmebohrungen eingesetzt werden.

Bei der hier gezeigten Zahnradeinrichtung umfasst der Grundkörper neben den außenseitigen Zahnkranz 2 auch einen Ritzelabschnitt 26 der unmittelbar auf dem Nabenabschnitt 3 sitzt. Dieser Ritzelabschnitt 26 ist durch eine Fließ/Pressumformung gefertigt. Der Ritzelabschnitt 26 wird axial teilweise von der Zahnkranzeinrichtung überkragt. Durch diese Maßnahme wird es möglich, ein mit dem Ritzelabschnitt kämmendes Zahnrad zumindest teilweise in den von der Zahnkranzeinrichtung 2 umgriffenen Innenbereich hineinzuführen und damit den axialen Baurumbedarf eines unter Einschluss der hier gezeigten Zahnradeinrichtung realisierten Getriebesystems zu reduzieren.

Durch das erfindungsgemäße Konzept wird es für einen mit der Fertigung von Getriebekomponenten betrauten Zulieferer möglich eine sowohl ein Zahnrad, eine Lagereinrichtung sowie auch ein die Lagereinrichtung tragendes Zapfenelement umfassende Baueinheit bereitzustellen die ohne filigrane Montageaktionen, ggf. vollautomatisiert in eine entsprechende Gehäusestruktur eingesetzt werden kann, wobei sich auch hinsichtlich der Fertigung der Gehäusestruktur Vereinfachungen ergeben.

Durch das erfindungsgemäße Konzept wird es zudem möglich, hinsichtlich ihrer Integrationsschnittstellen gleichartige Baueinheiten zu schaffen die jedoch unterschiedliche, z.B. anforderungsspezifisch qualitativ entsprechend aufgebaute Lagerungen beinhalten.

Die erfindungsgemäße Zahnradeinrichtung kann im Bereich ihrer Lagerung mit einem Sonderschmierstoff befrachtet sein, durch welchen unmittelbar bei Inbetriebnahme eine vorteilhafte Schmierung und ein günstiges Einlaufverhalten sichergestellt wird.

Die erfindungsgemäße Zahnradeinrichtung kann insbesondere bei Systemen Anwendung finden bei welchen bislang Zahnräder über beidseitig über den Zahnradkorpus hervorkragende Achszapfen durch in das Gehäuse eingesetzte Lager gelagert wurden. Die erfindungsgemäße Zahnradeinrichtung kann auch als Reparaturkit ausgelegt werden welcher bei Getriebesystem eingesetzt wird bei welchen die gehäuseseitigen Laufflächen ausgelaufen sind. In diesem Falle ist es möglich, entweder den Steckzapfen so zu dimensionieren, dass dieser direkt in die ausgelaufenen Lagerbohrungen eingesetzt, oder ggf. mit Sitzringen bestückt wird, welche in den ausgelaufenen Lagerbohrungen sitzen.

Die erfindungsgemäße Zahnradeinrichtung kann auch als Upgradepackage eingesetzt werden das als Austauschbaugruppe zu weniger leistungsfähigen Getriebeeinbauten verwendet werden kann. Die erfindungsgemäße Zahnradeinrichtung eignet sich insbesondere für den Einsatz bei Automatikgetrieben, bei Kfz-Schaltgetrieben zur Realisierung einer Drehrichtungsumkehrstufe, bei Anlassergetrieben und FEAD-Getrieben. Die erfindungsgemäße Zahnradeinrichtung kann insbesondere auch im Sondermaschinenbau, sowie bei landwirtschaftlichen Geräten Anwendung finden.

## Patentansprüche

1. Zahnradeinrichtung mit:
einem Grundkörper (1),
einem an dem Grundkörper (1) ausgebildeten Zahnkranz (2),
einem Nabenabschnitt (3),
einer Lagereinrichtung (4) die in dem Nabenabschnitt (3) aufgenommen ist,
und
einem Steckzapfen (5) der in die Lagereinrichtung (4) eingesetzt ist,
wobei der Steckzapfen (5) und die Lagereinrichtung (4) in dem Grundkörper (1) derart axial gesichert sind, dass der Grundkörper (1), die Lagereinrichtung (4) und der Steckzapfen (5) eine für sich vormontierte Baueinheit bilden.

2. Zahnradeinrichtung nach Anspruch 1, **dadurch gekennzeichnet, dass** der Steckzapfen (5) derart dimensioniert ist, dass dieser beidseitig axial über die entsprechende Stirnseite des Nabenabschnitts (3) übersteht.

3. Zahnradeinrichtung nach Anspruch 1 oder 2, **dadurch gekennzeichnet, dass** der Steckzapfen (5) als Hohlzapfen ausgeführt ist.

4. Zahnradeinrichtung nach Anspruch 1 oder 2, **dadurch gekennzeichnet, dass** der Steckzapfen (5) als Vollmaterialzapfen ausgeführt ist.

5. Zahnradeinrichtung nach wenigstens einem der Ansprüche 1 bis 4, **dadurch gekennzeichnet, dass** der Grundkörper als Blechumformteil gefertigt ist.

6. Zahnradeinrichtung nach wenigstens einem der Ansprüche 1 bis 5, **dadurch gekennzeichnet, dass** die Lagereinrichtung (4) als Gleitlager ausgeführt ist.

7. Zahnradeinrichtung nach wenigstens einem der Ansprüche 1 bis 5, **dadurch gekennzeichnet, dass** die Lagereinrichtung (4) als Wälzlager ausgeführt ist.

8. Zahnradeinrichtung nach Anspruch 7, **dadurch gekennzeichnet, dass** die Lagereinrichtung (4) als zweireihiges Nadellager ausgeführt ist und der Steckzapfen 5 in dem Nadellager axial gesichert ist.

9. Zahnradeinrichtung nach Anspruch 8, **dadurch gekennzeichnet,**
**dass** die Lagereinrichtung (4) Axiallagerorgane umfasst, wobei diese Axiallagerorgane als Gleitlagerringe (10a, 11a) ausgeführt sind, und dass diese Axiallagerorgane an dem Grundkörper (1) gesichert sind.

10. Zahnradeinrichtung nach wenigstens einem der Ansprüche 1 bis 9, **dadurch gekennzeichnet, dass** im Zusammenspiel mit dem Nabenabschnitt (3) ein Zahnradritzel (26) gefertigt ist.
